# EUROPÄISCHE PATENTSCHRIFT

(11) **EP 0 482 567 B1**
(45) Veröffentlichungstag und Bekanntmachung des Hinweises auf die Patenterteilung: **23.04.1997**
(21) Anmeldenummer: 91117965.3
(22) Anmeldetag: 22.10.1991
(51) Int. Cl.: F16D 65/09

(54) **Bremsbackenlagerung für Fahrzeugtrommelbremse**
Brake shoe support for vehicle drum brake
Support de mâchoires de frein pour frein à tambour de véhicule

(30) Priorität: 24.10.1990 DE 4033738
(43) Veröffentlichungstag der Anmeldung: 29.04.1992
(73) Patentinhaber: Otto Sauer Achsenfabrik Keilberg, 63856 Bessenbach (DE)
(72) Erfinder: Koschinat, Hubert B., c/o KEIL & SCHAAFHAUSEN, W-6000 Frankfurt am Main 1 (DE)
(74) Vertreter: Keil, Rainer A., Dipl.-Phys. Dr.

(56) Entgegenhaltungen:
- EP-A- 0 078 115
- DE-U- 8 806 286
- DE-U- 9 014 704
- FR-A- 780 738
- FR-A- 2 291 411
- US-A- 2 351 040
- US-A- 2 519 952

## Beschreibung

Die Erfindung betrifft eine Fahrzeugtrommelbremse mit einer Bremsbackenlagerung nach dem Oberbegriff des Anspruchs 1.

Aus der FR-A-2 291 411 ist eine Fahrzeugtrommelbremse dieser Art bekannt. Die in Quernuten eines querverschieblichen Keilgliedes und Längsnuten eines Verankerungsblockes geführten Kugeln dienen der einwandfreien Kraftübertragung von dem Keilglied auf die unter Federvorspannung zusammengehaltenen freien Enden der Bremsbelagträger. Die einander gegenüberliegenden Enden der Bremsbelagträger sind über ein Gestänge und einen Stellzylinder quer miteinander verbunden, so daß die Bremsbacken trotz ihrer Abstützung auf einer Kugel bei Betätigung der Bremse lediglich um eine Achse parallel zur Bremstrommelachse verschwenken können, zumal die inneren Enden der Bremsbelagträger über zusätzliche Zylinderflächen und ebene Flächen an dem Verankerungsblock geführt sind.

Bei einer aus der FR-A-780 738 bekannten Bremsbackenlagerung stützen sich die beiden Bremsbelagträger über einstellbare Bolzen an einer sphärischen Fläche eines Bremsträgers ab. Bei Betätigung der Bremse werden die Bremsbeläge, die auf den Bremsbelagträgern befestigt sind, gegen die Innenseite der Bremstrommel derart gedrückt, daß sich die Bremstrommel radial aufweitet. Diese Aufweitung ist in axialer Richtung nicht gleich, sondern sie nimmt zur offenen Seite der Bremstrommel hin geringfügig zu. Dies führt zu einer ungleichmäßigen Anlage der Bremsbacken an der Innenfläche der Bremstrommel sowie einer entsprechend ungleichmäßigen Verteilung des Anpreßdruckes und damit zu einer Verschlechterung der Bremsleitung.

Bei einer aus der DE-U-8 806 286 bekannten Trommelbremse für Fahrzeuge, insbesondere Kraftfahrzeuge, sind die Bremsbelagträger mittels Lagerbolzen in einer Ebene schwenkbar an dem Bremsträger angebracht. Eine derartige Lagerung verlangt einen verhältismäßig großen Herstellungs- und Montageaufwand mit Spezialwerkzeugen. Außerdem bestehen auch hier die zuvor geschilderten Probleme.

Aufgabe der vorliegenden Erfindung ist es, eine Fahrzeugtrommelbremse der eingangs genannten Art derart auszugestalten, daß bei einfacher Herstellung und Montage eine möglichst gleichmäßige Anlage der Bremsbacken an der Innenfläche der Bremstrommel erreicht wird.

Diese Aufgabe wird erfindungsgemäß im wesentlichen mit den Merkmalen des Anspruchs 1 gelöst.

Bei einer solchen Fahrzeugbremstrommel können die Bremsbelagträger nicht nur um eine zu der Bremstrommelachse parallele Achse schwenken, sondern um den jeweiligen Kugelmittelpunkt der Kugel in jeder beliebigen Richtung, insbesondere also auch um eine Achse senkrecht zur erstgenannten Schwenkachse. Durch die freie Bewegbarkeit der Kugeln in der jeweiligen Lagerschale kann unter allen Lastzuständen eine gleichmäßige Anlage der Bremsbacken an der Innenfläche der Bremstrommel und damit ein gleichmäßiger Anpreßdruck über die gesamte Breite des Bremsbelages gewährleistet werden, auch wenn sich die Bremstrommel geringfügig aufweitet. Die Herstellung und Montage ist einfach und kostengünstig, zumal als Kugeln auch aus der Kugellagerindustrie bekannte und als Massenprodukt kostengünstig erhältliche Lagerkugeln eingesetzt werden können, welche die Toleranzgrenze für Präzisionskugellager überschritten haben.

Die Kugeln der Kugellagerung sind entweder in einer Lagerschale des Lagerstücks des Bremsträgers bzw. eines Endstücks des jeweiligen Bremsbelagträgers unverlierbar eingefangen, wobei bspw. die betreffende Lagerschale die Kugel um mehr als 180° umgreift.

Die Bremsbelagträger können in einfacher Weise durch eine aufsteckbare Federklammer unter Abstützung der Kugel der Kugellagerung an dem Bremsträger gehalten sein. Eine derartige Federklammer für den Zusammenhalt der Kugellagerung bietet den Vorteil, sowohl kostengünstig als auch einfach in der Handhabung zu sein.

Wenn die Federklammer einrastbar auf die Bremsbelagträger aufgesteckt werden kann, ergibt sich eine noch weitere Vereinfachung von Montage und Demontage der Bremsbelagträger.

Die Herstellung der Bremsbelagträger wird noch kostengünstiger bei Verwendung der Endstücke der Bremsbelagträger als Einrastkörper für die Federklammer.

Wenn die Federklammer z.B. als Blattfeder einer Breite ausgebildet ist, welche geringfügig kleiner als der Abstand von zwei die Bremsbelagträger bildenden Stegen ist, und die Vertiefungen im Bereich der Außenflächen der Endstücke der Bremsträger zwischen den Stegen vorgesehen sind, erhält die Federklammer eine genaue Positionierung und Sicherung gegen seitliches Abrutschen aus der Einrastlage.

Bei einer weiteren vorteilhaften Ausgestaltung der Erfindung ist vorgesehen, daß die Federklammer von oben auf die Endstücke der Bremsbelagträger unter Übergreifen des Lagerstücks des Bremsträgers aufsteckbar ist. Damit liegt sie gut zugänglich für Demontage und Montage.

Durch eine S-förmige Ausbildung von Endbereichen der Federklammer kann in einfacher Weise eine Verbesserung der Federcharakteristik erzielt werden. Zudem ist bspw. durch Vergrößerung oder Verkleinerung der Federschlaufe die Federcharakteristik leicht veränderbar.

vorteilhafterweise sind die Federenden über die Endbereiche der Federklammer hinaus verlängert, so daß die Federklammer leichter montierbar und demontierbar ist.

In einer weiteren Ausgestaltung des Erfindungsgedankens ist vorgesehen, daß die Federenden Bohrungen aufweisen. Durch diese Bohrungen kann ein Montagewerkzeug gesteckt werden, wodurch die Montage bzw. Demontage der Federklammer weiter erleichtert wird.

Um einem Verschleiß der erfindungsgemäßen Lagerung möglichst entgegenzuwirken, kann ferner vorgesehen sein, daß in dem im Bereich der Federdruckbeaufschlagung liegenden Scheitelbereich der jeweiligen Lagerschalen der Bremsbelagträger und/oder der Lagerschale des Lagerstücks des Bremsträgers eine Ausnehmung vorgesehen ist. Der Bereich der höchsten Druckbeanspruchung von Kugel und Lagerschale wird dadurch ausgespart.

Für eine Schmierung des Lagers und/oder das Ausheben der Kugel aus der Lagerschale ist es ein Vorteil, wenn in die jeweilige Lagerschale des Lagerstücks des Bremsträgers bzw. des Bremsbelagträgers ein Fettkanal bzw. Auswurfkanal mündet. Über diesen Fettkanal bzw. Auswurfkanal kann der Gleitfläche zwische Kugel und Lagerschale Fett zugeführt bzw. ein Werkzeug zum Ausheben der Kugel aus der Lagerschale eingeführt werden.

In einer weiteren vorteilhaften Ausgestaltung der Erfindung ist der Fett- bzw. Auswurfkanal als Schlitz ausgebildet, was eine Demontage der Kugeln erheblich erleichtert.

Der Fettkanal bzw. Auswurfkanal mündet zweckmäßigerweise in die Ausmündung der Lagerschale, welche dadurch als zusätzliche Fettkammer dient.

Da die Bremsbelagträger aufgrund der Kugellagerung auch aus ihrer Ebene herauskippen können, ist es von Vorteil, wenn die Bremsbelagträger mit ihren freien Enden am S-Nocken der Bremsbackenbetätigung gegen Kippen um eine Achse senkrecht zur Bremstrommelachse geführt sind.

Mit der Erfindung wird ferner vorgeschlagen, das Lagerstück des Bremsträgers und/oder die Endstücke der Bremsbelagträger als Schmiedeteil(e) auszubilden. Durch diese gesonderte Herstellung der Endstücke des Bremsbelagträgers wird bei der Herstellung der Bremsbacken eine erheblich bessere Materialausnutzung erzielt, da bisher übliche Bremsbelagträger mit Endstücken als ein Teil gefertigt werden. Dadurch können bspw. aus einem 10 m langen Stahlblech nur 130 Stück der bekannten Bremsbelagträger mit Endstück hergestellt werden, während bei sogar geringerer Breite des Stahlblechs gleicher Länge 168 Stück Bremsbelagträger nach der Erfindung hergestellt werden können.

Die Erfindung wird nachfolgend anhand von in den Zeichnungen dargestellten Ausführungsbeispielen näher erläutert.

Es zeigen:
- Fig. 1: schematisch eine Seitenansicht einer Bremsbackenlagerung nach einer Ausführungsform der Erfindung,
- Fig. 2: schematisch einen Teilschnitt der Bremsbackenlagerung nach Fig. 1 entlang der Linie A-A.

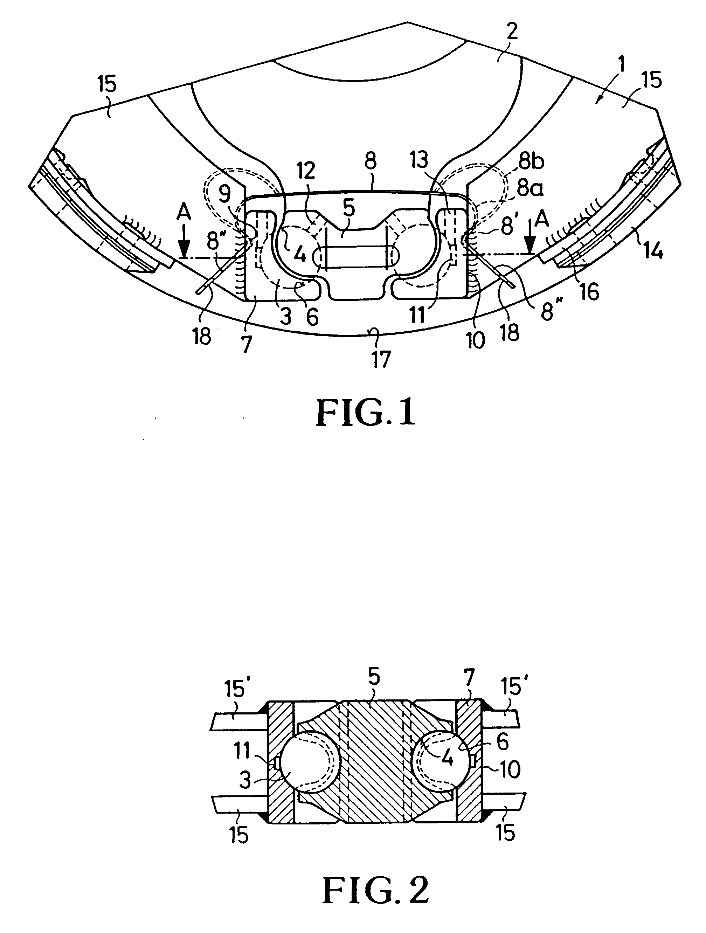

Fig. 1 und 2 zeigen eine Kugellagerung zur Anlenkung von Bremsbelagträgern 1 an einem Bremsträger 2 einer Fahrzeugtrommelbremse. Die beiden Bremsbelagträger 1 bestehen je aus zwei zueinander parallelen Stegen 15 bzw. 15'verbindenden, als Schmiedeteil ausgebildeten Endstück 7 und einem Belagblech 16, auf dem ein durch Spreizung der Bremsbelagträger 1 gegen die Bremstrommelinnenfläche 17 zur Einleitung des Bremsvorganges andrückbarer Bremsbelag 14 auswechselbar angebracht ist. Die Bremsbelagträger 1, deren Endstücke 7 mit einer Lagerschale 6 ausgebildet sind, stützen sich über eine Kugel 3 an dem an beiden Außenseiten mit Lagerschalen 4 ausgestatteten, als Schmiedeteil ausgebildeten Lagerstück 5 des Bremsträgers 2 ab.

Eine als Blattfeder ausgebildete und das Lagerstück 5 von oben bügelartig übergreifende Federklammer 8 rastet mit ihren abgewinkelten Endbereichen 8' in Vertiefungen 9 einer seitlich aufeinander gegenüberliegenden nach außen weisenden Außenfläche 10 der Endstücke 7 der Bremsbelagträger 1 und hält dadurch die gesamte Lagerung zusammen. Die Breite der Federklammer 8 ist geringfügig kleiner als der lichte Abstand der Stege 15, 15', so daß die Federklammer 8 in die zwischen den Stegen 15, 15' liegende Vertiefung 9 eingreifen kann und gegen seitliches Verrücken gesichert ist. Auch wird hierdurch ein unbeabsichtigtes Abklappen der Bremsbelagträger 1 während der Montagearbeiten verhindert.

In Fig. 1 sind verschiedene Ausführungsformen der Federklammer 8 dargestellt. So können die Endbereiche 8' der Federklammer 8 lediglich etwa einen S-Form-Abschnitt 8a aufweisen oder als Federschlaufe 8b ausgebildet sein. Federklammerenden 8'' ragen über die Endbereiche 8' hinaus und sind jeweils mit einem Loch 18 versehen.

Sowohl das Lagerstück 5 als auch die Endstücke 7 haben je einen als Bohrung ausgebildeten Fettkanal 12 bzw. Fettkanal 13. Die Kanäle 12, 13 können auch als durchgeschmiedeter Schlitz ausgebildet sein. Zudem weisen die Endstücke 7 in dem äußeren Scheitelpunkt der Lagerschale 6 eine Ausnehmung 11 auf, über die das Fett von dem Fettkanal 13 in die Kugellagerung gelangt. Der Fettkanal 13 mündet im Bereich der Ausnehmung 11 tangential in die Lagerschale 6, so daß er durch Einführen eines Werkzeugs als Auswurfkanal für die Kugel 3 dienen kann. Während die Kugel 3 lose in die Lagerschale 6 eingreift, ist sie in der Lagerschale 4 des Lagerstücks 5 durch Umbiegen deren Seitenränder um mehr als 180° unverlierbar eingefangen.

Bei Ausbildung der Fettkanäle 12, 13 als Schlitz erfolgt eine Demontage der Kugel durch Aufbiegen der Umklammerung. Um dies zu ermöglichen, sollte die Länge des Schlitzes zumindest dem halben Kugeldurchmesser entsprechen.

Durch die erfindungsgemäße Kugellagerung können sich die Bremsbacken 14 bei Spreizung der beiden Bremsbelagträger 1 durch eine Drehung eines auf die oberen (nicht dargestellten) freien Enden der Bremsbelagträger 1 einwirkende S-Nockens, an welchem die Bremsbelagträger 1 gegen seitliches Kippen geführt sind, gleichmäßig an die veränderliche Kontur der Bremstrommelinnenfläche 17 anlegen.

## Patentansprüche

1. Fahrzeugtrommelbremse mit einer Bremsbackenlagerung, bei welcher Bremsbelagträger (1) um im wesentlichen zur Bremstrommelachse parallele Achsen zur Abstützung an einer Kugel (3, 3') schwenkbar an einem Bremsträger (2) angelenkt sind, um bei Bremsbetätigung gegen die Innenseite einer Bremstrommel gedrückt zu werden, **dadurch gekennzeichnet**, daß die Bremsbelagträger (1) durch Drehung eines auf deren freien Enden einwirkenden S-Nocken schwenkbar sind, daß die Anlenkung der Bremsbelagträger (1) an dem Bremsträger (2) durch eine Kugellagerung (3, 4, 6) mit an die Form der Kugeln (3, 3') angepaßten Lagerschalen 4, 4'; 6, 6') in dem Bremsträger (2) und den Bremsbelagrägern (1) so getroffen ist, daß die Bremsbelagräger (1) bei Anlage der Bremsbeläge (14) an der Bremstrommelinnenfläche (17) auch um eine Achse senkrecht zur Bremstrommelachse schwenken können und daß die jeweilige Kugel (3, 3') von jeweils einer Lagerschale (4, 4') oder (6, 6') derart umfaßt wird, daß die Kugel (3, 3') unverlierbar in dem dazugehörigen Bremsbelagträger (1) bzw. einem Lagerstück (5) eingefangen ist.

2. Fahrzeugtrommelbremse nach Anspruch 1, **dadurch gekennzeichnet**, daß die jeweilige Kugel (3, 3') der Kugellagerung entweder in einer Lagerschale (4, 4') eines Lagerstücks (5) des Bremsträgers (2) oder in einer Lagerschale (6, 6') eines Endstücks (7) des jeweiligen Bremsbelagträgers (1) unverlierbar eingefangen ist.

3. Fahrzeugtrommelbremse nach Anspruch 1 oder 2, **dadurch gekennzeichnet**, daß die Bremsbelagträger (1) mittels einer aufsteckbaren Federklammer (8) unter Abstützung an den Kugeln (3, 3') der Kugellagerung an dem Bremsträger (2) gehalten ist.

4. Fahrzeugtrommelbremse nach Anspruch 3, **dadurch gekennzeichnet**, daß die Federklammer (8) mit ihren Endbereichen (8') vorzugsweise in entgegensetzte Richtungen weisende Vertiefungen (9) der Bremsbelagträger (1) einrastbar ist.

5. Fahrzeugtrommelbremse nach Anspruch 4, **dadurch gekennzeichnet**, daß die Vertiefungen (9) an den Außenflächen (10) der Endstücke (7) des Bremsbelagträger (1) ausgebildet sind.

6. Fahrzeugtrommelbremse nach einem der Ansprüche 3 bis 5, **dadurch gekennzeichnet**, daß die Federklammer (8) z.B. als Blattfeder einer Breite ausgebildet ist, welche geringfügig kleiner als der Abstand von zwei die Bremsbelagträger (1) bildenden Stegen (15, 15') ist und die Vertiefungen (9) im Bereich der Außenflächen (10) der Endstücke (7) der Bremsbelagträger (1) zwischen den Stegen (15, 15') vorgesehen sind.

7. Fahrzeugtrommelbremse nach einer der Ansprüche 3 bis 6, **dadurch gekennzeichnet**, daß die Federklammer (8) von oben auf die Endstücke (7) des Bremsbelagträger (1) unter Übergreifen des Lagerstücks (5) des Bremsträgers (2) aufsteckbar ist.

8. Fahrzeugtrommelbremse nach einem der Ansprüche 3 bis 7, **dadurch gekennzeichnet**, daß Endbereiche (8') der Federklammer (8) als Federschlaufe (8b) ausgebildet ist.

9. Fahrzeugtrommelbremse nach einem der Ansprüche 3 bis 8, **dadurch gekennzeichnet**, daß Federenden (8'') über die Endbereiche (8') der Federklammer (8) hinausragen.

10. Fahrzeugtrommelbremse nach einem der Ansprüche 1 bis 9, **dadurch gekennzeichnet**, daß in dem im Bereich der Federdruckbeaufschlagung liegenden Scheitelbereich der jeweiligen Lagerschale (6, 6') der Bremsbelagträger (1) und/oder der Lagerschale (4, 4') des Lagerstücks (5) des Bremsträgers (2) eine Ausnehmung (11) vorgesehen ist.

11. Fahrzeugtrommelbremse nach Anspruch 10, **dadurch gekennzeichnet**, daß in die jeweilige Lagerschale (4, 4'; 6, 6') des Lagerstücks (5) des Bremsträgers (2) bzw. des Bremsbelagträgers (1) ein Fettkanal (12, 13) mündet.

12. Fahrzeugtrommelbremse nach Anspruch 11, **dadurch gekennzeichnet**, daß der Fettkanal (12, 13) als Schlitz ausgebildet ist.

13. Fahrzeugtrommelbremse nach Anspruch 11 oder 12, **dadurch gekennzeichnet**, daß der Fettkanal (12, 13) in die Ausnehmung (11) mündet.

14. Fahrzeugtrommelbremse nach einem der Ansprüche 1 bis 13, **dadurch gekennzeichnet**, daß die Bremsbelagträger (1) mit ihren freien Enden am S-Nocken der Bremsbackenbetätigung gegen Kippen um eine Achse senkrecht zur Bremstrommelachse geführt sind.

15. Fahrzeugtrommelbremse einem der Ansprüche 2 bis 14, **dadurch gekennzeichnet**, daß das Lagerstück (5) des Bremsträgers (2) und/oder die Endstücke (7) der Bremsbelagträger (1) als gesonderte(s) Schmiedeteil(e) ausgebildet sind/ist.

## Claims

1. Vehicle drum brake with a brake shoe bearing in which the brake pad carrier (1) is hinged to a brake carrier (2) to swivel about an axis essentially parallel to the brake drum axis to rest on a ball (3, 3'), in order on brake activation to be pressed against the inside of a brake drum, characterized in that the brake pad carriers (1) can be swivelled by rotation of an S-cam acting of their free ends, that the hinging of the brake pad carriers (1) to the brake carrier (2) is achieved by a ball bearing (3, 4, 6) with bearing shells (4, 4'; 6, 6') adapted to the shape of the balls (3, 3') in the brake carrier (2) and the brake pad carriers (1) such that the brake pad carriers (1), when the brake pads (14) lie on the inner surface of the brake drum (17), can also swivel about an axis vertical to the brake drum axis and the balls concerned (3, 3') are each surrounded by a bearing shell (4, 4') or (6, 6') such that the balls (3, 3') are held captive in the associated brake pad carrier (1) or a bearing element (5).

2. Vehicle drum brake according to claim 1, characterized in that the balls concerned (3, 3') of the ball bearing are held captive either in a bearing shell (4, 4') of a bearing element (5) of the brake carrier (2) or in a bearing shell (6, 6') of an end piece (7) of the brake pad carrier (1) concerned.

3. Vehicle drum brake according to claim 1 or 2, characterized in that the brake pad carrier (1) is held on the brake carrier (2) by means of a push-on spring clamp (8) resting on the balls (3, 3') of the ball bearing.

4. Vehicle drum brake according to claim 3, characterized in that the spring clamp (8) with its end areas (8') engages preferably in recesses (9) of the brake pad carrier (1) pointing in the opposite directions.

5. Vehicle drum brake according to claim 4, characterized in that the recesses (9) are formed on the outer surfaces (10) of the end pieces (7) of the brake pad carrier (1).

6. Vehicle drum brake according to any of claims 3 to 5, characterized in that the spring clamp (8) is formed for example as a leaf spring of a width slightly smaller than the distance of two bars (15, 15') forming the brake pad carrier (1), and the recesses (9) are provided in the area of the outer surface (10) of the end pieces (7) of the brake pad carrier (1) between the bars (15, 15').

7. Vehicle drum brake according to any of claims 3 to 6, characterized in that the spring clamp (8) can be pushed from above onto the end pieces (7) of the brake pad carrier (1) over the bearing element (5) of the brake carrier (2).

8. Vehicle drum brake according to any of claims 3 to 7, characterized in that end zones (8') of the spring clamp (8) are formed as spring loops (8b).

9. Vehicle drum brake according to any of claims 3 to 8, characterized in that springs ends (8") project beyond the end zones (8') of the spring clamp (8).

10. Vehicle drum brake according to of claims 1 to 9, characterized in that in the crown zone, which lies in the area of the spring pressure contact, of the relevant bearing shell (6, 6') of the brake pad carrier (1) and/or bearing shell (4, 4') of the bearing element (5) of the brake carrier (2) is a recess (11).

11. Vehicle drum brake according to claim 10, characterized in that a grease channel (12, 13) opens into the bearing shell concerned (4, 4'; 6, 6') of the bearing element (5) of the brake carrier (2) or brake pad carrier (1).

12. Vehicle drum brake according to claim 11, characterized in that the grease channel (12, 13) is designed as a slot.

13. Vehicle drum brake according to claim 11 or 12, characterized in that the grease channel (12, 13) opens into the recess (11).

14. Vehicle drum brake according to any of claims 1 to 13, characterized in that the brake pad carrier (1) is guided with its free ends on the S-cam of the brake shoe activation against tilting about an axis vertical to the brake drum axis.

15. Vehicle drum brake according to any of claims 2 to 14, characterized in that the bearing element (5) of the brake carrier (2) and/or the end piece (7) of the brake pad carrier (1) is/are formed as separate forged part(s).

## Revendications

1. Frein à tambour pour véhicules avec un montage des mâchoires de frein, dans lequel des supports de garnitures (1) sont articulés sur un support de frein (2), avec possibilité de pivotement autour d'axes sensiblement parallèles à l'axe du tambour de frein, en prenant appui sur une bille (3, 3'), de telle sorte que lors de l'actionnement du frein, ils soient pressés contre la surface intérieure d'un tambour de frein, caractérisé par le fait que le pivotement des supports de garnitures (1) est obtenu par la rotation d'une came en S qui agit au niveau des extrémités libres desdits supports de garnitures, par le fait que l'articulation des supports de garnitures (1) sur le support de frein (2) au moyen d'un palier à billes (3, 4, 6), avec des coussinets (4, 4'; 6, 6') adaptés à la forme des billes (3, 3') dans le support de frein (2) et les supports de garnitures (1), est agencée de telle sorte que les supports de garnitures (1), lorsque les garnitures (14) sont appliquées sur la surface intérieure (17) du tambour, puissent également pivoter autour d'un axe perpendiculaire à l'axe du tambour de frein et par le fait que la bille (3, 3') concernée est entourée chaque fois par un coussinet (4, 4') ou (6, 6') de telle sorte que ladite bille (3,3 ') soit tenue de manière imperdable dans le support de garniture (1) concerné ou dans un élément de palier (5).

2. Frein à tambour pour véhicules selon la revendication 1, caractérisé par le fait que la bille (3, 3') du palier est tenue de manière imperdable, soit dans un coussinet (4, 4') d'un élément de palier (5) du support de frein (2), soit dans un coussinet (6, 6') d'une pièce d'extrémité (7) du support de garniture (1) concerné.

3. Frein à tambour pour véhicules selon la revendication 1 ou 2, caractérisé par le fait que les supports de garnitures (1) sont tenus par une agrafe (8) élastique en appui sur les billes (3, 3') du palier à billes du support de frein (2).

4. Frein à tambour pour véhicules selon la revendication 3, caractérisé par le fait que l'agrafe (8) élastique peut être encliquetée par ses parties terminales (8'), de préférence dans des cavités (9) des supports de garnitures (1) orientées dans des directions opposées .

5. Frein à tambour pour véhicules selon la revendication 4, caractérisé par le fait que les cavités (9) sont aménagées dans les surfaces extérieures (10) des pièces d'extrémité (7) des supports de garnitures (1).

6. Frein à tambour pour véhicules selon l'une des revendications 3 à 5, caractérisé par le fait que l'agrafe (8) élastique se présente sous la forme par exemple d'un ressort à lame dont la largeur est légèrement inférieure à la distance entre deux nervures (15, 15') qui forment le support de garniture (1) et que les cavités (9) sont prévues dans la région des surfaces extérieures (10) des pièces d'extrémité (7) des supports de garnitures (1), entre les nervures (2).

7. Frein à tambour pour véhicules selon l'une des revendications 3 à 6, caractérisé par le fait que l'agrafe (8) élastique peut être encliquetée par le haut sur les pièces d'extrémité (7) des supports de garnitures (1) en chevauchant l'élément de palier (5) du support de frein (2).

8. Frein à tambour pour véhicules selon l'une des revendications 3 à 7, caractérisé par le fait que les parties d'extrémité (8') de l'agrafe (8) élastique sont conformées en boucle élastique (8b).

9. Frein à tambour pour véhicules selon l'une des revendications 3 à 8, caractérisé par le fait que les extrémités (8") élastiques font saillie au-delà des parties d'extrémité (8') de l'agrafe (8) élastique.

10. Frein à tambour pour véhicules selon l'une des revendications 1 à 9, caractérisé par le fait qu'un évidement (11) est prévu dans la région du sommet, dans la zone d'application de la force du ressort, du coussinet (6, 6') concerné des supports de garnitures (1) et/ou des coussinets (4, 4') de l'élément de palier (5) du support de frein (2).

11. Frein à tambour pour véhicules selon la revendication 10, caractérisé par le fait qu'un canal de graissage (12, 13) débouche dans le coussinet (4, 4'; 6, 6') concerné de l'élément de palier (5) ou des supports de garnitures (1).

12. Frein à tambour pour véhicules selon la revendication 11, caractérisé par le fait que le canal de graissage (12, 13) est réalisé sous la forme d'une fente.

13. Frein à tambour pour véhicules selon la revendication 1 1 ou 12, caractérisé par le fait qu'un canal de graissage (12, 13) débouche dans l'évidement (11).

14. Frein à tambour pour véhicules selon l'une des revendications 1 à 13, caractérisé par le fait que les supports de garnitures (1) sont guidés par leurs extrémités libres sur la came en S du système d'actionnement du frein de manière à empêcher leur basculement autour d'un axe perpendiculaire à l'axe du tambour de frein.

15. Frein à tambour pour véhicules selon l'une des revendications 2 à 14, caractérisé par le fait que l'élément de palier (5) du support de frein (2) et/ou les pièces d'extrémité (7) des supports de garnitures (1) sont agencées sous forme de pièce(s) matricée(s) séparée(s).
